Europäisches Patentamt

European Patent Office

Office européen des brevets

(11) Veröffentlichungsnummer : **0 058 894**
**B1**

(12) EUROPÄISCHE PATENTSCHRIFT

(45) Veröffentlichungstag der Patentschrift :
16.04.86

(51) Int. Cl.⁴ : **G 11 B  3/68, G 11 B  3/70**

(21) Anmeldenummer : 82101039.4

(22) Anmeldetag : 12.02.82

(54) Kratzfeste, antistatische Ton- und Bildträger und Verfahren zu ihrer Herstellung.

(30) Priorität : 21.02.81 DE 3106544
21.02.81 DE 3106573

(43) Veröffentlichungstag der Anmeldung :
01.09.82 Patentblatt 82/35

(45) Bekanntmachung des Hinweises auf die Patenterteilung : 16.04.86 Patentblatt 86/16

(84) Benannte Vertragsstaaten :
AT DE FR GB IT NL

(56) Entgegenhaltungen :
DE-A- 2 131 983
DE-U- 7 708 861
GB-A- 1 474 842

(73) Patentinhaber : GfO Gesellschaft für Oberflächentechnik m.b.H.
Klarenbergstrasse 79 Postfach 12 40
D-7070 Schwäbisch Gmünd (DE)

(72) Erfinder : Breuninger, Axel
Götzentalstrasse 49
D-7073 Lorch (DE)
Erfinder : Pöllmann, Richard, Dipl.-Ing.
Hardtstrasse 40
D-7070 Schwäbisch Gmünd (DE)
Erfinder : Scheyrer, Peter, Dipl.-Ing.
Kaffeebergweg 16
D-7070 Schwäbisch Gmünd (DE)

(74) Vertreter : Nowak, Gerhard
DEGUSSA AG Fachbereich Patente Postfach 1345
D-6450 Hanau 1 (DE)

## Beschreibung

Die Erfindung betrifft kratzfeste, antistatische Ton- und Bildträger aus Kunststoffen, insbesondere Schall- und Videoplatten, die mit einer oder zwei im Hochvakuum aufgebrachten metallischen Oberflächenschichten aus Edelmetallen oder Eisen, Chrom und Nickel enthaltenen Legierungen versehen sind und ein Verfahren zu ihrer Herstellung.

Ton- und Bildträger aus Kunststoffen, wie Schallplatten, Videoplatten oder andere mechanisch abgetastete Informationsträger, verlieren relativ schnell nach einer begrenzten Abspielhäufigkeit an Wiedergabegüte durch mechanischen Verschleiß des Trägermaterials und durch elektrostatisch angezogenen Staub. Die elektrostatischen Aufladungen führen außerdem zu einer Beeinträchtigung der Wiedergabequalität.

Es ist bekannt, Schallplatten durch Überziehen mit Goldschichten kratzfest und antistatisch zu machen.

Dazu wird die Trägerplatte, beispielsweise aus Polyvinylchlorid, zuerst chemisch mit einer elektrisch leitenden Nickelschicht von 2 bis 3 μm Dicke überzogen und diese anschließend galvanisch mit etwa 5 μm Schichtdicke vergoldet. Solche Schallplatten sind allerdings nicht mehr einwandfrei abspielbar und weisen eine geringe Tonqualität auf.

Es ist weiterhin bekannt, auf Schallplatten im Hochvakuum eine dünne Goldschicht von etwa 0,5 μm Stärke aufzudampfen. Solche Schallplatten haben eine sehr gute optische Wirkung und lassen sich auch abspielen, jedoch ist die Haftfestigkeit der Goldschicht auf dem Kunststoffträger so gering, daß sich der Goldbelag nach wenigen Abspielzyklen abschabt.

Durch Aufbringen einer Grundlackschicht auf die Trägeroberfläche vor dem Vergolden kann man zwar die Haftfestigkeit der Goldschicht verbessern, die Lackschicht setzt jedoch die Ton- bzw. Bildrillen zu, so daß sich solche Platten nicht mehr abspielen lassen und nur noch dekorativen Zwecken dienen. Der dekorative Zweck steht bei den meisten bisher bekannten mit einer Metallschicht versehenen Schall- und Videoplatten im Vordergrund. Zum Abspielen sind diese weniger geeignet.

In der GB-PS-14 74 842 werden Tonträger aus Kunststoffen beschrieben, die mit einer oder mehreren im Hochvakuum aufgebrachten metallischen Schichten versehen sind, die haftfest sind, bei sehr dünnen Auflagen (< 0,1 μm) die Tonqualität nicht beeinträchtigen und die elektrostatische Aufladung vermindern. Als Überzugsschichten werden beispielsweise Gold und nickelreiche Legierungen genannt (Ni-Cr bzw. 76 Ni 15 Cr 9 Fe). Es hat sich jedoch erwiesen, daß Goldschichten auf dem Träger nicht optimal haften und nickelreiche Legierungen die Tonqualität beim Abspielen dieser Tonträger beeinträchtigen, insbesondere wenn die Überzugsschichten dicker als 0,1 μm sind.

Es war daher Aufgabe der vorliegenden Erfindung, kratzfeste und antistatische Ton- und Bildträger aus Kunststoff, insbesondere Schall- und Videoplatten, die mit einer oder zwei im Hochvakuum aufgebrachten metallischen Oberflächenschichten aus Edelmetall oder Eisen, Chrom und Nickel enthaltenden Legierungen versehen sind, zu schaffen, die nicht nur ein dekoratives Aussehen besitzen, sondern auch beliebig oft mit gleichbleibender Ton- bzw. Bildqualität abspielbar sein sollten, ohne daß gegenüber dem ursprünglichen, unbeschichteten Ton- und Bildträger eine Qualitätsminderung eintritt.

Diese Aufgabe wurde erfindungsgemäß dadurch gelöst, daß die Eisen-Chrom-Nickel-Legierungen 10 bis 25 Gew.% Chrom, 5 bis 20 Gew.% Nickel, Rest Eisen enthält.

Vorzugsweise enthält diese Eisen-Chrom-Nickel-Legierung 15 bis 22 Gew.% Chrom und 8 bis 15 Gew.% Nickel.

Eine besondere Dekorationswirkung und eine besonders gute Abspielqualität erzielt man, wenn der Überzug aus der Eisen-Chrom-Nickel-Legierung mit einem ebenfalls im Hochvakuum aufgebrachten dünnen Edelmetallüberzug beschichtet ist. In diesem Fall ist es möglich, für den ersten Überzug eine nickelfreie Eisen-Chrom-Legierung zu verwenden, die 10 bis 22 Gew.% Chrom, vorzugsweise 12 bis 18 Gew.% Chrom enthalten muß.

Die Edelmetallschicht kann aus allen bekannten Edelmetallen, wie zum Beispiel Platin, Palladium, Rhodium, Iridium, Silber, Gold oder deren Legierungen bestehen. Am besten bewährt haben sich Gold und Goldlegierungen.

Vorteilhafterweise beträgt die Schichtdicke des Eisen-Chrom-Legierungsüberzuges 0,02 bis 0,3 μm, die des Edelmetallüberzuges 0,2 bis 0,6 μm, insbesondere 0,3 bis 0,5 μm. Wird nur eine Eisen-Chrom-Nickel-Legierung als Überzug aufgebracht, ohne zusätzliche Edelmetallschutzschicht, beträgt die Schichtdicke ebenfalls 0,2 bis 0,6 μm.

Die Herstellung der erfindungsgemäßen Ton- und Bildträger erfolgt vorzugsweise dadurch, daß auf die nach bekannten Verfahren vorbehandelten Oberflächen des Kunststoffträgers im Hochvakuum eine dünne Eisen-Chrom-Nickel-Legierungsschicht oder zuerst eine dünne Schicht aus einer Eisen-Chrom-Legierung und unmittelbar anschließend eine dünne Edelmetallschicht aufgebracht werden. Die Aufbringung der Schichten erfolgt vorteilhafterweise durch thermische Aufdampfung oder Elektronenstrahlverdampfung. Die Schichten können allerdings auch aufgesputtert werden. Dabei hat sich ein Hochvakuum von < 8.10⁻⁴ mbar bewährt.

Wichtig für die haftfeste Abscheidung der Metallschichten auf den Kunststoffträger ist, daß dieser nach einer Reinigung mit Wasch- oder Lösungsmitteln elektrostatisch neutralisiert wird, beispielsweise mit einem Alpha-Strahler. Weiterhin ist wichtig, daß die Aufbringung der als Haftvermittler dienenden Eisen-Chrom-Schicht und der Edelmetallschicht innerhalb eines einzigen Aufdampfzyklus unmittelbar hintereinander erfolgt, ohne Unterbrechung des Vakuums.

Derartig behandelte Schallplatten konnten mit einem marktüblichen Tonabnehmersystem mehr als tausendmal hintereinander abgespielt werden, ohne hörbare Verschlechterung der Wiedergabequalität. Auf die antistatische Reinigung der Platte konnte verzichtet werden. Sie sind kratzfest, auf der Abspielnadel kann keinerlei Abrieb nachgewiesen werden. Der metallische Glanz verleiht den Platten ein dekoratives Aussehen, das auch über lange Zeiträume unverändert erhalten bleibt.

**Patentansprüche**

1. Kratzfeste, antistatische Ton- und Bildträger aus Kunststoffen, insbesondere Schall- und Videoplatten, die mit einer einzigen oder einer ersten und einer zweiten im Hochvakuum aufgebrachten metallischen Oberflächenschicht versehen sind, wobei die einzige oder die erste Oberflächenschicht aus einer Eisen, Chrom und Nickel enthaltenden Legierung und die zweite Oberflächenschicht aus Edelmetall besteht, dadurch gekennzeichnet, daß die Eisen-Chrom-Nickel-Legierung 10 bis 25 Gew.% Chrom, 5 bis 20 Gew.% Nickel, Rest Eisen enthält.

2. Kratzfeste, antistatische Ton- und Bildträger nach Anspruch 1, dadurch gekennzeichnet, daß die Eisen-Chrom-Nickel-Legierung 15 bis 22 Gew.% Chrom, 8 bis 15 Gew.% Nickel, Rest Eisen enthält.

3. Kratzfeste, antistatische Ton- und Bildträger aus Kunststoffen, insbesondere Schall- und Videoplatten, die mit einer einzigen oder einer ersten und einer zweiten im Hochvakuum aufgebrachten metallischen Oberflächenschicht versehen sind, wobei die einzige oder die erste Oberflächenschicht aus einer Eisen, und Chrom enthaltenden Legierung und die zweite Oberflächenschicht aus Edelmetall besteht, dadurch gekennzeichnet, daß die Eisen-Chrom-Legierung 10 bis 22 Gew.% Chrom, Rest Eisen enthält.

4. Kratzfeste, antistatische Ton- und Bildträger nach einem der Ansprüche 1 bis 3, dadurch gekennzeichnet, daß die Edelmetalloberflächenschicht aus Gold besteht.

5. Kratzfeste, antistatische Ton- und Bildträger nach einem der Ansprüche 1 bis 4, dadurch gekennzeichnet, daß die Schichtdicke der ersten Oberflächenschicht 0,02 bis 0,3 μm, die der Edelmetalloberflächenschicht 0,2 bis 0,6 μm beträgt.

6. Verfahren zur Herstellung kratzfester, antistatischer Ton- und Bildträger nach einem der Ansprüche 1 bis 5, dadurch gekennzeichnet, daß die Oberflächen des Kunststoffträgers im Hochvakuum zuerst eine erste dünne Oberflächenschicht aus einer Eisen-Chrom-Legierung mit 10 bis 22 Gew.% Chrom oder aus einer Eisen-Chrom-Nickel-Legierung mit 10 bis 25 Gew.% Chrom und 5 bis 20 Gew.% Nickel und unmittelbar anschließend eine zweite dünne Edelmetalloberflächenschicht aufgebracht werden.

7. Verfahren nach Anspruch 1 bis 6, dadurch gekennzeichnet, daß das Aufbringen im Hochvakuum durch Aufdampfen erfolgt.

8. Verfahren nach Anspruch 1 bis 7, dadurch gekennzeichnet, daß ein Hochvakuum $< 8.10^{-4}$ mbar verwendet wird und vor dem Aufdampfvorgang eine elektrostatische Neutralisierung der Kunststoffoberflächen erfolgt.

**Claims**

1. Scratch resistant, anti-static sound and vision carriers of plastics material, particularly records and video discs, which are provided with a single or a first and a second metallic surface layer applied under high vacuum, the single or the first surface layer consisting of an iron, chromium and nickel-containing alloy and the second surface layer consisting of a noble metal, characterised in that the iron-chromium-nickel alloy contains from 10 to 25 % by weight of chromium from 5 to 20 % by weight of nickel, with the remainder iron.

2. Scratch resistant, anti-static sound and vision carriers according to claim 1, characterised in that the iron-chromium-nickel alloy contains from 15 to 22 % by weight of chromium, from 8 to 15 % by weight of nickel, with the remainder iron.

3. Scratch resistant, anti-static sound and vision carriers of plastics material, particularly records and video discs, which are provided with a single or a first and a second metallic surface layer applied under high vacuum, the single or first surface layer consisting of an iron, and chromium-containing alloy and the second surface layer consisting of noble metal, characterised in that the iron-chromium alloy contains from 10 to 22 % by weight of chromium with the remainder iron.

4. Scratch resistant, anti-static sound and vision carriers according to one of claims 1 to 3, characterised in that the noble metal surface layer consists of gold.

5. Scratch resistant, anti-static sound and vision carriers according to one of claims 1 to 4, characterised in that the layer thickness of the first surface layer is from 0.02 to 0.3 μm, that of the noble metal surface layer is from 0.2 to 0.6 μm.

6. A process for the production of scratch resistant, anti-static sound and vision carriers according to one of claims 1 to 5, characterised in that the surfaces of the plastics material carrier initially have applied thereto under high vacuum a first thin surface layer of an ironchromium alloy with from 10 to 22 % by weight of chromium or an iron-chromium-nickel alloy with from 10 to 25 % by weight of chromium and from 5 to 20 % by weight of nickel and a second thin noble metal surface layer is applied immediately subsequent thereto.

7. A process according to claim 1 to 6 characterised in that the application under high vacuum takes place by vacuum metallization.

8. A process according to claim 1 to 7, characterised in that a high vacuum $< 8.10^{-4}$ mbar is used and an electrostatic neutralisation of the plastics material surfaces takes place before the vacuum metallization process.

## Revendications

1. Supports de son et d'image en matières plastiques, résistant au rayage, antistatiques, en particulier disques phonographiques et vidéodisques, qui sont dotés d'une seule ou d'une première et d'une deuxième couche superficielle métallique appliquée sous vide poussé, la couche, ou la première couche superficielle, étant constituée d'un alliage contenant du fer, du chrome et du nickel, et la deuxième couche superficielle étant constituée de métal noble, caractérisés par le fait que l'alliage fer-chrome-nickel contient 10 à 25 % en poids de chrome, 5 à 20 % en poids de nickel, le reste étant du fer.

2. Supports de son et d'image résistant au rayage, antistatiques, selon la revendication 1, caractérisés par le fait que l'alliage fer-chrome-nickel contient 15 à 22 % en poids de chrome, 8 à 15 % en poids de nickel, le reste étant du fer.

3. Supports de son et d'image en matières plastiques, résistant au rayage, antistatiques, en particulier disques phonographiques et vidéodisques, qui sont dotés d'une seule ou d'une première et d'une deuxième couche superficielle métallique déposée sous vide poussé, la couche ou la première couche superficielle étant constituée d'un alliage contenant du fer et du chrome, et la deuxième couche superficielle étant constituée de métal noble, caractérisés par le fait que l'alliage fer-chrome contient 10 à 22 % en poids de chrome, le reste étant du fer.

4. Supports de son et d'image, résistant au rayage, antistatiques, selon l'une des revendications 1 à 3, caractérisés par le fait que la couche superficielle de métal noble est constituée par de l'or.

5. Supports de son et d'image résistant au rayage, antistatiques, selon l'une des revendications 1 à 4, caractérisés par le fait que l'épaisseur de couche de la première couche superficielle est de 0,02 à 0,3 μ, celle de la couche superficielle de métal noble, de 0,2 à 0,6 μ.

6. Procédé pour la préparation de supports de son et d'image résistant au rayage, antistatiques selon l'une des revendications 1 à 5, caractérisé par le fait que sur les surfaces du support en matière plastique sont déposées, sous vide poussé, d'abord une première mince couche superficielle constituée d'un alliage fer-chrome contenant 10 à 22 % en poids de chrome ou d'un alliage fer-chrome-nickel contenant 10 à 25 % en poids de chrome et 5 à 20 % en poids de nickel, et, immédiatement après, une deuxième mince couche superficielle de métal noble.

7. Procédé selon la revendication 1 à 6, caractérisé par le fait que le dépôt sous vide poussé se fait sous forme de vapeur.

8. Procédé selon les revendications 1 à 7, caractérisé par le fait que l'on utilise un vide poussé $< 8.10^{-4}$ mbar, et qu'avant l'opération de vaporisation, on effectue une neutralisation électrostatique des surfaces de matière plastique.